# EUROPEAN PATENT APPLICATION

(11) **EP 2 481 890 A2**
(43) Date of publication of application: **01.08.2012**
(21) Application number: 11195716.3
(22) Date of filing: 23.12.2011
(51) Int. Cl.: F01D 11/12, F01D 5/28

(54) **Seal in a gas turbine engine component having a coating with abradability proportional to interaction rate**

(30) Priority: 26.01.2011 US 201113013949
(71) Applicant: United Technologies Corporation, Hartford, CT 06101 (US)
(72) Inventor: Strock, Christopher W., Kennebunk, ME Maine 04043 (US); Bintz, Matthew E., West Hartford, CT Connecticut 06107 (US)
(74) Representative: Tomlinson, Kerry John

(57) **Abstract**

A seal and a method of forming the seal in a gas turbine engine component. The seal between an airfoil (26;28) with a radial end (26T;28T) and a seal member adjacent it is coated with an abrasive layer (66;76) having a ceramic component in a matrix of a metal alloy with hexagonal BN. The ceramic component is selected from silica, quartz, alumina, zirconia and mixtures thereof and the metal is selected from nickel, cobalt, copper and iron. The ceramic ranges from about 1% to about 10% and the amount of nickel, cobalt, copper or iron will range from about 30% to about 60% by volume, and the balance is hBN.

## Description

### BACKGROUND

Gas turbine engines include compressor rotors having a plurality of rotating compressor blades. Minimizing the leakage of air, such as between tips of rotating blades and a casing of the gas turbine engine, increases the efficiency of the gas turbine engine because the leakage of air over the tips of the blades can cause aerodynamic efficiency losses. To minimize this, the gap at tips of the blades is set small and at certain conditions, the blade tips may rub against and engage an abradable seal at the casing of the gas turbine. The abradability of the seal material prevents damage to the blades while the seal material itself wears to generate an optimized mating surface and thus reduce the leakage of air.

Cantilevered vanes that seal against a rotor shaft are used for elimination of the air leakage and complex construction of vane inside diameter (ID) shroud, abradable seal and knife edges that are used in present gas turbine engines. Current cantilevered vane tip sealing experiences the difficulty that the tip gaps need to be set more open than desirable to prevent rub interactions that can cause rotor shaft coating spallation, vane damage or rotor shaft burn through due to thermal runaway events during rubs. Current materials have been found to lack the durability to prevent spallation and lack the abradability to prevent vane damage.

Blade outer seals do not have as many problems as inner seals, but do need to have the ability to resist fine particle erosion and have a suitable wear ratio between the seal and the airfoil.

It would be an advantage for an abradable coating for rotor that is capable of running against bare vane tips and have a desirable balance of wear between both the vane tips and the coating. The coating should also prevent catastrophic thermal runaway events, coating spallation and damage to the vanes.

### SUMMARY

The present invention comprises an abrasive coating forming a seal material on components of gas turbine engines. The present invention comprises an abrasive coating on the surface of the rotor to form a seal with the stator vanes and/or on the inside of the casing to form a seal with the rotor blades.

Therefore, according to a first aspect, the invention provides a method of forming a seal in a gas turbine engine component, the method comprising: providing an airfoil with a bare metal airfoil tip; and providing a seal member adjacent to the bare metal airfoil tip, wherein the seal member is coated with an abrasive layer having a ceramic component in a matrix of a metal and hexagonal boron nitride (hBN).

According to a second aspect, the invention provides a gas turbine engine component comprising: an airfoil with a radial outward end and a radial inward end wherein a tip of the airfoil is bare metal; a seal member adjacent to the end of the airfoil wherein the seal member is coated with an abrasive coating having a ceramic component in a matrix of a metal alloy with hexagonal BN.

The abrasive coating preferably contains ceramic particles in a composite matrix of hexagonal boron nitride (hBN) in nickel, cobalt, copper, iron or mixtures thereof. The ceramic particles are preferably irregularly flattened shapes that are described as "splats" in the thermal spray field. The ceramic particles may preferably be any ceramic that has a hardness of seven or more on the Mohs Scale for hardness, such as silica, quartz, alumina and zirconia.

The abrasive coating will often include a base bond coat layer. The bond coat may be MCr, MCrAl, MCrAlY or a refractory modified MCrAlY, where M is nickel, cobalt, iron or mixtures thereof.

When thermal protection is needed, preferably there is also a layer between the abrasive coating and the bond coat comprising a ceramic layer that acts as a thermal barrier to protect the coated components. Ceramic layers include, for example, zirconia, hafnia, mullite, alumina.

### BRIEF DESCRIPTION OF THE DRAWINGS

FIG. 1 illustrates a simplified cross-sectional view of a gas turbine engine.

FIG. 2 illustrates a simplified cross sectional view of a rotor shaft inside a casing illustrating the relationship of the rotor and cantilevered vanes taken along the line 2-2 of FIG. 1, not to scale.

FIG. 3 is a cross sectional view taken along the line 3-3 of FIG. 2, not to scale.

FIG. 4 is a cross sectional view of another embodiment.

FIG. 5 is a cross sectional view of yet another embodiment.

FIG. 6 is a cross sectional view taken along the line 5-5 of FIG. 4, not to scale.

### DETAILED DESCRIPTION

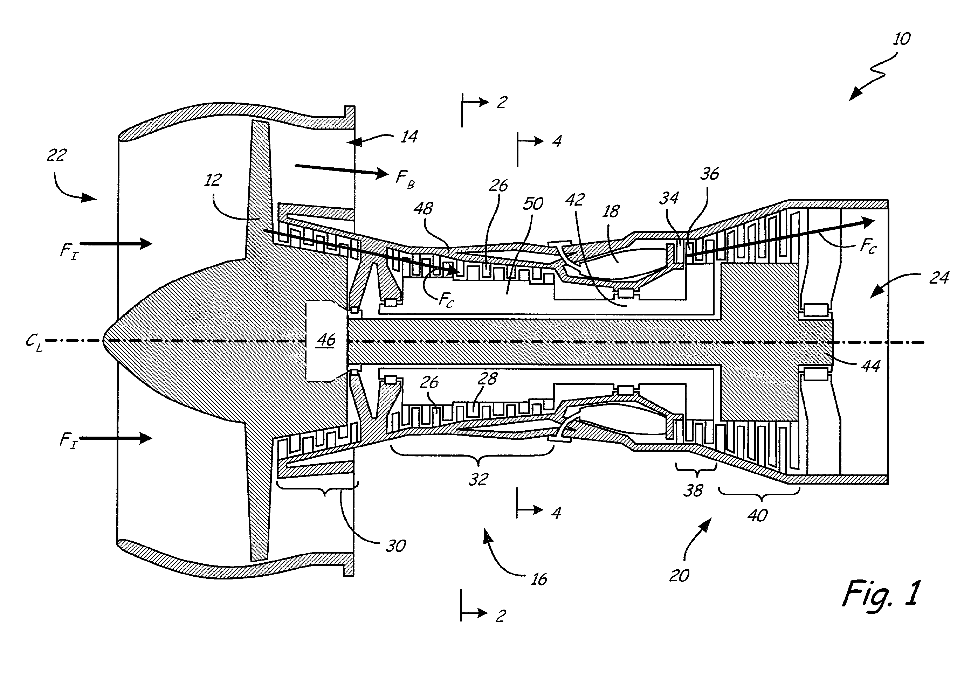

FIG. 1 is a cross-sectional view of gas turbine engine 10, in a turbofan embodiment. As shown in FIG. 1, turbine engine 10 comprises fan 12 positioned in bypass duct 14, with bypass duct 14 oriented about a turbine core comprising compressor (compressor section) 16, combustor (or combustors) 18 and turbine (turbine section) 20, arranged in flow series with upstream inlet 22 and downstream exhaust 24.

Compressor 16 comprises stages of compressor vanes 26 and blades 28 arranged in low pressure compressor (LPC) section 30 and high pressure compressor (HPC) section 32. Turbine 20 comprises stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool or high spool. LPT section 40 is coupled to LPC section 30 and fan 12 via LPT shaft 44, forming the low pressure spool or low spool. HPT shaft 42 and LPT shaft 44 are typically coaxially mounted, with the high and low spools independently rotating about turbine axis (centerline) C_{L}.

Fan 12 comprises a number of fan airfoils circumferentially arranged around a fan disk or other rotating member, which is Coupled (directly or indirectly) to LPC section 30 and driven by LPT shaft 44. In some embodiments, fan 12 is coupled to the fan spool via geared fan drive mechanism 46, providing independent fan speed control.

As shown in F1G. 1, fan 12 is forward-mounted and provides thrust by accelerating flow downstream through bypass duct 14, for example in a high-bypass configuration suitable for commercial and regional jet aircraft operations. Alternatively, fan 12 is an unducted fan or propeller assembly, in either a forward or aft-mounted configuration. In these various embodiments turbine engine 10 comprises any of a high-bypass turbofan, a low-bypass turbofan or a turboprop engine, and the number of spools and the shaft configurations may vary. Also contemplated for use with the present invention are marine and land based turbines that may or may not have a fan or propeller.

In operation of turbine engine 10, incoming airflow F₁ enters inlet 22 and divides into core flow F_{C} and bypass flow F_{B}, downstream of fan 12. Core flow F_{C} propagates along the core flowpath through compressor section 16, combustor 18 and turbine section 20, and bypass flow F_{B} propagates along the bypass flowpath through bypass duct 14.

LPC section 30 and HPC section 32 of compressor 16 are utilized to compress incoming air for combustor 18, where fuel is introduced, mixed with air and ignited to produce hot combustion gas. Depending on embodiment, fan 12 also provides some degree of compression (or pre-compression) to core flow F_{C}, and LPC section 30 may be omitted. Alternatively, an additional intermediate spool is included, for example in a three-spool turboprop or turbofan configuration.

Combustion gas exits combustor 18 and enters HPT section 38 of turbine 20, encountering turbine vanes 34 and turbine blades 36. Turbine vanes 34 turn and accelerate the flow, and turbine blades 36 generate lift for conversion to rotational energy via HPT shaft 50, driving HPC section 32 of compressor 16 via HPT shaft 50. Partially expanded combustion gas transitions from HPT section 38 to LPT section 40, driving LPC section 30 and fan 12 via LPT shaft 44. Exhaust flow exits LPT section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

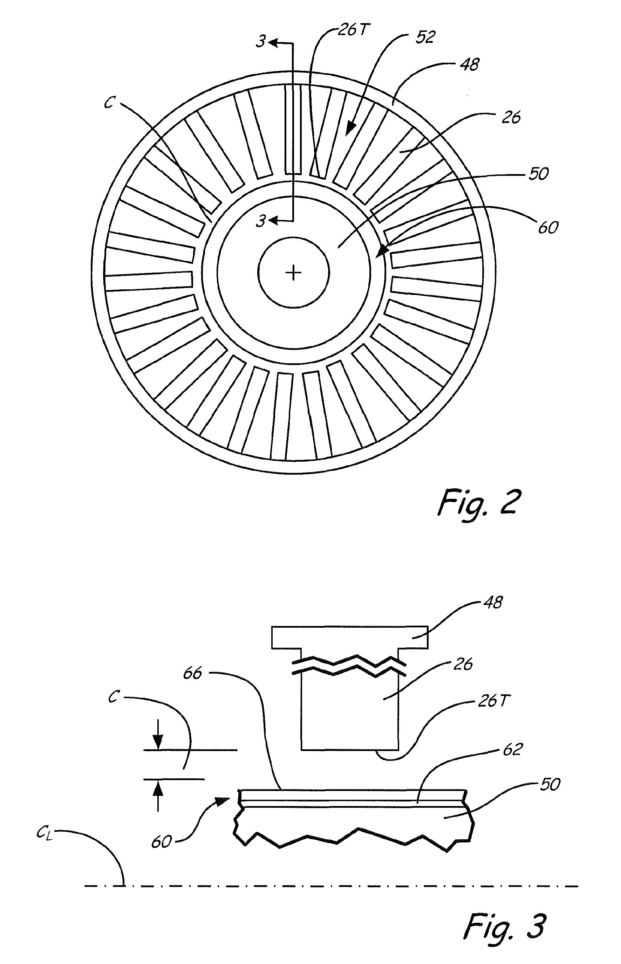

FIG. 2 is a cross section along line 22 of FIG. 1 of a casing 48 which has a rotor shaft 50 inside. Vanes 26 are attached to casing 48 and the gas path 52 is shown as the space between vanes 26. Coating 60, corresponding to the coating of this invention, is on rotor shaft 50 such that the clearance C between coating 60 and vane tips 26T of vanes 26 has the proper tolerance for operation of the engine, e.g., to serve as a seal to prevent leakage of air (thus reducing efficiency), while not interfering with relative movement of the vanes and rotor shaft. In FIGS. 2 and 3, clearance C is expanded for purposes of illustration. In practice, clearance C may be, for example, in a range of about 0.025 inches to 0.055 inches (0.064 cm to 0.14 cm) when the engine is cold and 0.000 to 0.035 (0.000 cm to 0.089 cm) inches during engine operation, depending on the specific operating conditions and previous rub events that may have occurred.

FIG. 3 shows the cross section along line 3-3 of FIG. 2, with casing 48 and vane 26. Coating 60 is attached to rotor shaft 50, with a clearance C between coating 60 and vane tip 26T of vane 26 that varies with operating conditions, as described herein.

FIG. 3 shows an embodiment comprising bi-layer coating 60 in which includes metallic bond coat 62 and abrasive layer 66. Metallic bond coat 62 is applied to rotor shaft 50. Abrasive layer 66 is deposited on top of bond coat 62 and is the layer that first encounters vane tip 26T.

Bond coat 62 is thin, up to 10 mils (254 microns), more specifically ranging from about 3 mils to about 7 mils (about 76 to about 178 microns). Abrasive coating 66 may be about the same thickness as bond coat 64, again ranging from about 3 mils to about 7 mils (about 76 to about 178 microns), while some applications that have larger variation in tip clearance may require a thicker abrasive layer. Abrasive layer 66 may be as thick as 300 mils (7620 microns) in some applications.

The bond coat may be MCr, MCrAl., MCrAlY or a refractory modified MCrAlY, where M is nickel, cobalt, iron or mixtures thereof. For example, bond coat 62 may be 15-40% Cr 6-15% Al, 0.61 to 1.0%. Y and the balance is cobalt, nickel or iron and combinations thereof.

Top abrasive layer 66 is a low strength abradable composite matrix of a metal alloy such as Ni, Co, Cu, Al MCrAlY loaded with hexagonal boron nitride (hBN) into which flat ceramic particles have been added by thermal spraying. The amount of Ni to hBN in the abt-adable matrix ranges from about 30% to about 60% by volume, and more specifically about 40% to about 50% Ni by volume, with the balance being hBN,. The Ni alloy, hBN (ahBN) and ceramic may be deposited as a coating by individually feeding the powders to one or more spray torches or by blending the two powders and air plasma spraying (APS). Other spray processes would also be effective, such as combustion flame spray, HVOF, HVAF. LPPS, VPS, HVPS and the like. As part of the coating is a quantity of ceramic that at least partially melts during the spray process to form disc like flat particles, or splat particles.

The ceramic particles may be any ceramic that has a hardness of seven or more on the Mohs Scale for hardness, such as silica, quartz, alumina and zirconia and that at least partially melts at the spray temperatures. The amount of ceramic in coating 66 ranges from about 1% to about 10% by volume. The amount of metal alloy will range from about 30% to about 60% and more specifically about 40% to about 50% Ni by volume, and the balance of 30% to about70% by volume of hBN. During the spray application of coating 66, the porosity of coating 66 is controlled to be less than about 10% and even below 5% to decrease the aerodynamic effect.

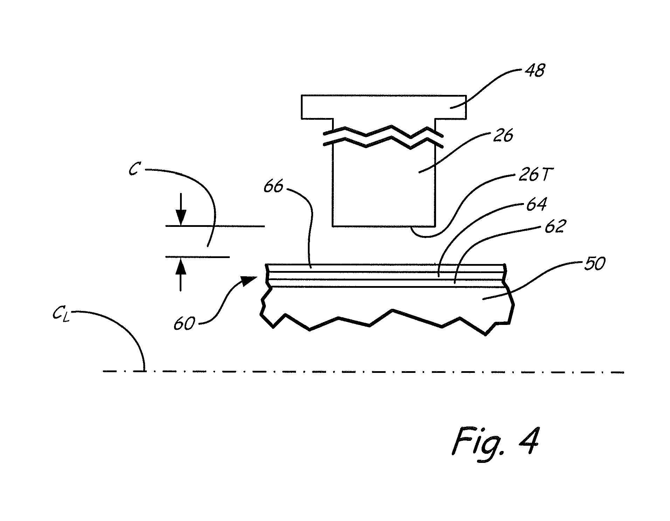

Abrasive layer 66 may also be deposited on an intermediate thermally insulating layer to further protect the rotor shaft from burn through during excessive vane contact. FIG. 4 shows an embodiment comprising tri-layer coating 60, which includes intermediate insulating ceramic layer 64 between top abrasive layer 66 and bottom coat layer 62.

Optional ceramic layer 64, shown in FIG. 4, may be any of the zirconia based ceramics such as are described in U.S. Patent Nos. 4,861,618, 5,879,573, 6,102,656 and 6,358,002. Zirconia stabilized with 6-8 wt. % yttria is one example of such a ceramic layer 64. Other examples are zirconia stabilized with ceria, magnesia, mullite, calcia and mixtures thereof. Optional thermally insulating ceramic layer 64 thickness may range from about 7 mils to about 12 mils (about 178 to about 305 inicrons). In many instances, there is no need for optional thermally insulating ceramic layer 64 because abrasive coating 66 functions to remove material by low temperature abrasion minimizing or eliminating thermal burn through of the rotor in high interaction rate events.

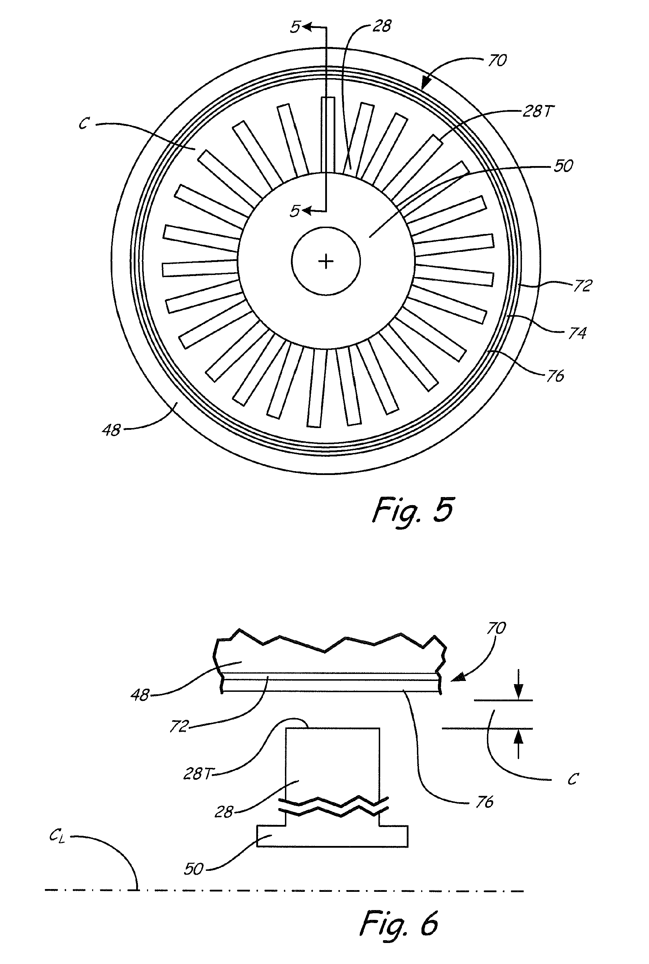

As can be seen from FIG. 5 and FIG. 6, the same concept is used in which coating 70 is provided on the inner diameter surface of casing or shroud 48. Coating 70 includes a first metallic bond coat 72 that has been applied to the ID of stator casing 48. In other embodiments, stator casing 48 includes a shroud that forms a blade air seal. Abrasive layer 76 is formed on metallic bond coating 72 and is the layer that first encounters rotor tip 28T.

Coating 66 and 76 has a high abradability during fast and/or deep rubs to prevent catastrophic runaway events and damage to turbine components. During low speed rub interactions when frictional heating is low, the ceramic particles result in the desired wear of airfoil tips. When the interaction rate and rub forces increase for any reason, including local vane material transfer, thermal growth and high interaction rates, rub forces may climb only to a limit. Coating 66 and 76 is designed to have a low enough strength to limit rub forces on the airfoils by abrading at contact pressures of less than about 1,000 psi (6.9 MPa). In one case, 1,000 psi (6.9 MPa) coating strength relates to about 20 pounds (9.1 kg) per vane loading of compressor stators. Because the bulk coating must meet the durability requirements of the environment, such as the high G environment of the shaft outside diameter in a cantilevered vane sealing application, the abradable coating 66 and 76 has a strength of greater than about 300 psi (2.1 MPA). The dual nature of coating 66 and 76 provides high abradability when interaction rates and rub forces increase while also cutting the airfoil when interaction rates are low and the ceramic particles dominate the rub interaction.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a seal in a gas turbine engine component (26;28), the method comprising:
providing an airfoil (26;28) with a bare metal airfoil tip (26;28T); and
providing a seal member adjacent to the bare metal airfoil tip, wherein the seal member is coated with an abrasive layer (66;76) having a ceramic component in a matrix of a metal and hexagonal boron nitride (hBN).

2. The method of claim 1, wherein the component (26) is a compressor stator vane and the seal member includes a rotor seal surface (50),
or,
wherein the component is a compressor rotor blade and the seal member includes a vane seal surface.

3. The method of claims 1 or 2, wherein the abrasive layer (66;76) is formed by air plasma spraying at a temperature sufficient to at least partially melt the ceramic component.

4. The method of any preceding claim, wherein the ceramic component has a hardness of seven or more on the Mohs Scale, preferably wherein the ceramic component is selected from the group consisting of silica, quartz, alumina, zirconia and mixtures thereof.

5. The method of any preceding claim, wherein the amount of ceramic in the seal member ranges from about 1% to about 10% by volume.

6. The method of any preceding claim, wherein the metal is selected from the group consisting of nickel, cobalt, copper, iron, aluminum and mixtures thereof.

7. The method of claim 6, wherein the amount of nickel, cobalt, copper, iron or aluminum will range from about 30% to about 60% by volume, and the balance is hBN.

8. The method of any preceding claim, wherein the porosity of the abrasive coating (66;76) is less than about 10%.

9. A gas turbine engine component comprising:
an airfoil (26;28) with a radial outward end (28T) and a radial inward end (26T) wherein a tip of the airfoil is bare metal;
a seal member adjacent to the end of the airfoil wherein the seal member is coated with an abrasive coating having a ceramic component in a matrix of a metal alloy with hexagonal BN.

10. The component of claim 9, wherein the abrasive (66;76) layer is formed by air plasma spraying at a temperature sufficient to at least partially melt the ceramic component.

11. The compound of claim 9 or 10, wherein the ceramic component has a hardness of seven or more on the Mohs Scale.

12. The component of any of claims 9, 10 or 11, wherein the ceramic component is selected from the group consisting of silica, quartz, alumina, zirconia and mixtures thereof and the metal is selected from the group consisting of nickel, cobalt, copper, iron, aluminum and mixtures thereof.

13. The component of any of claims 9 to 12, wherein the amount of ceramic ranges from about 1% to about 10% by volume, wherein the amount of nickel, cobalt, copper or iron will range from about 30% to about 60% by volume, and the balance is hBN.

14. The component of any of claims 9 to 13, wherein said seal member is adjacent to the radial inward end of the airfoil.

15. A gas turbine engine (10) comprising:
an engine casing extending circumferentially about an engine centerline axis; and
a compressor section (16), a combustor section (18), and a turbine section (20) within said engine casing;
wherein at least one of said compressor section and said turbine section includes at least one component as claimed in any of claims 9 to 14.
